# EUROPÄISCHE PATENTSCHRIFT

(11) **EP 1 275 867 B1**
(45) Veröffentlichungstag und Bekanntmachung des Hinweises auf die Patenterteilung: **16.02.2005**
(21) Anmeldenummer: 02013489.6
(22) Anmeldetag: 17.06.2002
(51) Int. Cl.: F16D 21/06, F16D 13/38

(54) **Doppelkupplung**
Dual clutch
Embrayage double

(30) Priorität: 13.07.2001 DE 10134118
(43) Veröffentlichungstag der Anmeldung: 15.01.2003
(73) Patentinhaber: Volkswagen Aktiengesellschaft, 38436 Wolfsburg (DE)
(72) Erfinder: Damm, Ansgar, Dr., 38518 Gifhorn (DE); Schreiber, Wolfgang, Dr., 38550 Isenbüttel (DE); Lutz, Wolf-Rüdiger, Dr., 38442 Wolfsburg (DE); Becker, Volker, 38518 Gifhorn (DE); Kruse, Georg, 38518 Gifhorn (DE); Schade, Frank, 38110 Braunschweig-Bevenrode (DE)
(74) Vertreter: Hübsch, Dirk, Dipl.-Ing.

(56) Entgegenhaltungen:
- DE-A- 10 004 179
- DE-C- 887 589
- FR-A- 1 367 133
- US-A- 2 510 469

## Beschreibung

Die Erfindung betrifft eine Doppelkupplung nach dem Oberbegriff des Patentanspruches 1.

Doppelkupplungsgetriebe sind seit längerem bekannt und werden bevorzugt in Kraftfahrzeugen eingesetzt. Ein Doppelkupplungsgetriebe weist im allgemeinen zwei koaxial angeordnete Getriebeeingangswellen auf, denen jeweils eine separate Reibkupplung und eine Gruppe von Gangstufen zugeordnet sind. Zumeist umfasst die eine Gruppe die Gangstufen mit ungerader Ordnungszahl einschließlich des Rückwärtsganges, während die andere Gruppe die Gangstufen mit gerader Ordnungszahl aufweist. In einem derart ausgebildeten Doppelkupplungsgetriebe besteht ein Schaltvorgang, d.h. ein Wechsel von einem wirksamen Quellgang in einen nächsthöheren oder nächstniedrigeren Zielgang zunächst in einem Einlegen des Zielganges, was z.B. über eine entsprechende Schaltmuffe und eine einem Gangrad des Zielganges zugeordnete synchronisierte Gangschaltkupplung erfolgen kann, und in einem anschließenden überschnittenen Öffnen der der Getriebeeingangswelle des Quellganges zugeordneten Reibkupplung und Schließen der der Getriebeeingangswelle des Zielganges zugeordneten Reibkupplung. Außerhalb der Schaltvorgänge erfolgt die Kraftübertragung also jeweils wechselweise über eine der beiden Getriebeeingangswellen.

Ein wesentlicher Vorteil des Doppelkupplungsgetriebes gegenüber einem konventionellen Stufenwechselgetriebe liegt in den weitgehend zugkraftunterbrechungsfreien Schaltvorgängen. Hierdurch ist ein besseres Beschleunigungsvermögen im Zugbetrieb und ein besseres Verzögerungsvermögen im Schubbetrieb gegeben. Darüber hinaus ist der Fahrkomfort dadurch verbessert, dass Beschleunigungswechsel und durch eine Überbrückung von Lastspielen zwischen Bauteilen des Antriebsstranges bedingte Schlaggeräusche weitgehend vermieden werden.

Da bei manueller Betätigung von zwei Motorkupplungen und der Schaltung der Gänge mit vorübergehend zwei gleichzeitig eingelegten Gängen ein erheblicher mechanischer Aufwand erforderlich wäre, sind Doppelkupplungsgetriebe zumeist automatisiert ausgebildet, d.h. dass sowohl die Betätigung der Motorkupplungen als auch das Schalten der Gänge über zugeordnete Hilfsantriebe erfolgt, die elektromagnetisch, elektromotorisch, druckmittel-, wie z.B. hydraulisch, oder in anderer Weise betätigbar ausgebildet sein können.

Bekannte Doppelkupplungsgetriebe verwenden zwei ölgekühlte Lamellenkupplungen zum Anfahren bzw. Schalten. Die Ölkühlung hat den Nachteil, dass hierzu i.a. eine ständig vom Verbrennungsmotor angetriebene Pumpe erforderlich ist. Da diese Pumpe auch gleichzeitig die Druckölversorgung der Getriebesteuerung darstellt, muss sie einerseits auf einen hohen Ölvolumenstrom für die Kühlung, andererseits aber auch für einen hohen Druck zur Ansteuerung des Getriebes ausgelegt sein. Derartige Ölpumpen stellen eine ständige Leistungssenke dar und vermindern dadurch den Gesamtwirkungsgrad des Getriebes bzw. des Antriebstranges.

Eine wesentliche Verbesserung hinsichtlich des Wirkungsgrades stellen trockene Kupplungen dar. Sie benötigen keine aktive Kühlung und damit keine auf hohe Volumenströme ausgelegte Pumpe. Die Stellenergie für derartige Kupplungen kann direkt durch Elektromotoren oder mittels Hydroaggregat mit elektrisch betriebener Pumpe bereit gestellt werden.

Der Nachteil von Trockenkupplungen in der Form, wie sie bisher bei Handschaltgetrieben oder bei automatisierten Getrieben (ASG) verbaut werden, ist jedoch, dass die Betätigungskraft zum Ausrücken (Öffnen) der Kupplung über die Kupplung auf die Kurbelwelle überragen wird und von dieser im Axiallager des Kurbelgehäuses aufgenommen werden muss. Dieses Axiallager ist ein hydrodynamisch geschmiertes Gleitlager, das jedoch aufgrund der üblicherweise vorherrschenden Bedingungen hinsichtlich Drehzahl, Belastung und Ausgestaltung immer oder zumindest überwiegend im sogenannten Mischreibungsgebiet arbeitet. Aufgrund dieser Mischreibung kommt es an dieser Stelle einerseits zu einem erhöhten Verlustmoment, andererseits wird aber auch ein zusätzlicher Verschleiß der Motorlager induziert.

In konventionellen Antriebsträngen mit Handschaltgetrieben stellt dieser Umstand kein echtes Problem dar. Die Kupplungen werden aktiv öffnend ausgelegt. Axialkräfte werden hier nur dann erbracht, wenn der Fahrer auskuppelt, also die Kupplung betätigt. Dieser Zustand tritt aber nur während einer Schaltung, bei Fahrzeugstillstand (z.B. vor Ampeln) oder auch beim Start auf. Die Häufigkeit dieses Auftretens im Vergleich zur Gesamtlebensdauer des Fahrzeugs ist derart gering, dass dadurch kein zusätzlicher, unzulässiger Verschleiß auftreten kann. Der Grund für diese konventionelle Bauweise ist die zweckmäßige Montage. Die Kupplung wird zunächst mit der Kurbelwelle am fertigen Motor verschraubt, anschließend wird das Getriebe mit dem Motor verbunden.

In Automatikgetrieben oder Doppelkupplungsgetrieben mit nassen Kupplungen ist die Kupplung dagegen direkter Bestandteil des Getriebes. Die Montage der Kupplungen (des Wandlers) erfolgt im Rahmen der Getriebemontage. Vorteil dieser Methode ist, dass das Getriebe zusammen mit den Kupplungen eine eigenständige, vorprüfbare Einheit bildet. Die Montage im Fahrzeugwerk wird erheblich vereinfacht und die Gefahr von zusätzlichen Montagefehlern wesentlich verringert.

Während bei Handschaltgetrieben, wie oben ausgeführt, die Axialkraftbelastung der Motorlager aufgrund der geringen Belastungsdauer keine unzulässige Beanspruchung darstellt, führt sie bei Automatisierten Handschaltgetrieben und bei Doppelkupplungsgetrieben mit trockenen Reibkupplungen durchaus zu Schwierigkeiten. Der Grund hierfür ist, dass es bei derartigen Getrieben zweckmäßig ist, die Kupplung nicht vollständig zu schließen. Statt dessen ist es besser, die Kupplung entweder mit nur geringer Überkapazität ("Momentennachführung" bei Firma LuK) oder mit geringem Schlupf ("Mikroschlupf") zu betreiben.

Beide Methoden haben den Vorteil, dass kurzfristige Momentenstöße nicht auf das Antriebsaggregat übertragen werden, sondern durch kurzfristiges Schlupfen der Kupplung abgebaut werden können. Der Betrieb im Mikroschlupf hat darüber hinaus bei Doppelkupplungsgetrieben weitere Vorteile, die die Qualität der Schaltung erheblich verbessern.

Ein zusätzlicher Unterschied zwischen Handschaltgetrieben und Doppelkupplungsgetrieben ist der Umstand, dass bei Handschaltern, wie ausgeführt, die Kupplungen als aktiv öffnend gestaltet werden, während sie bei Doppelkupplungsgetrieben aus Sicherheitsgründen im Allgemeinen als aktiv schließend ausgeführt werden.

Die Notwendigkeit zur permanenten Ansteuerung der Kupplungen führt also bei Trockenkupplungen herkömmlicher Bauart dazu, dass auch ständig eine Axialkraft auf die Motorlager übertragen wird. Ebenso werden die Ausrücklager stark beansprucht. Ein erhöhter Verschleiß ist die Folge. Die Reibungsverluste am Axiallager der Kurbelwelle bei aktiv schließenden Kupplungen können darüber hinaus zu einer Erhöhung des Kraftstoffverbrauchs führen.

Aus der DE-GM 91 14 528 ist eine nasse Doppelkupplung bekannt, die innerhalb eines Getriebegehäuses angeordnet ist. Die Doppelkupplung weist zwei ölgekühlte Lamellenkupplungen auf, deren Innenlamellen mit einen gemeinsamen Träger verbunden sind, und deren Außenlamellen mit jeweils einem Träger drehfest verbunden sind, über die der Antrieb einer ersten oder zweiten Getriebeeingangswelle erfolgt. Eine Hohlradpumpe, die über eine Antriebswelle angetrieben wird, versorgt das komplette Getriebe mit Drucköl.

Nachteilig wirkt sich bei dieser Doppelkupplung aus, dass die Pumpe aufgrund ihrer Ausbildung als Nasskupplung zusätzlich zur Getriebesteuerung für die Ölkühlung eine hohen Volumenstrom erzeugen muss. Der dadurch höhere Leistungsbedarf der Pumpe vermindert den Gesamtwirkungsgrad des Getriebes. Die Konstruktion ist nicht geeignet, um bei einer Trockenkupplung den oben erläuterten Verschleiß durch die Axialkräfte der Kupplung zu verringern.

Aus der DE-OS 39 40 917 A1 ist eine trockene einfache Reibkupplung bekannt, die zwischen dem Kupplungsgehäuse und einer Membranfeder ein Ringzylinder mit zwei Drucklagern aufweist. Der Ringzylinder stützt sich gegen das Kupplungsgehäuse und die Membranfeder ab. Der Ringzylinder wird bei einer Betätigung eines Kupplungspedals mit Druck beaufschlagt wodurch ein Auskuppeln bewirkt wird. Die dabei auftretenden axialen Betätigungskräfte werden auf das Kupplungsgehäuse übertragen.

Nachteilig wirkt sich bei der bekannten Reibkupplung aus, dass der, die Axialkräfte abstützende Ringzylinder nur für ein konventionelles, aktiv öffnendes Handschaltgetriebe ausgelegt ist, bei dem nur im Falle der Betätigung des Kupplungspedals axiale Kräfte wirken. Diese Konstruktion ist jedoch nicht ohne weiteres für eine aktiv schließende Doppelkupplung zur Verringerung der Axialkräfte, verwendbar. Die Drucklager werden bei der Abstützung am Kupplungsgehäuse stark beansprucht, was bei der Verwendung dieser Abstützung in einer aktiv schließenden Kupplung, einen nicht zulässig hohen Verschleiß zur Folge hätte.

Aus der DE-OS 40 41 159 ist eine nasse Lamellenkupplung bekannt, die druckbeaufschlagt über ein Einrückstellglied bzw. Ausrückstellglied geschlossen bzw. geöffnet wird. Die Kupplungsanordnung ist vorzugsweise für ein Doppelkupplungsgetriebe vorgesehen. Um eine Reduzierung der Pumpleistung und damit der Verlustleistung zu erreichen, ist die Kupplung in den Hauptfahrbereichen mechanisch geschlossen. Die Stellglieder rotieren mit den Reibscheiben der Kupplung.

Diese Konstruktion ist ebenfalls nicht geeignet, den Verschleiß durch die problematischen Axialkräfte, wie sie bei einer trockenen Doppelkupplung auftreten, zu verringern.

Aus der DE 100 04 179 A ist eine Doppelkupplung bekannt, bei der ein Ringteil gegenüber der äußeren Hohlwelle über ein Axiallager abgestützt wird. Die Anordnung ist hier relativ komplex gestaltet und es sind mehrere weitere Komponenten, insbesondere ein weiteres Nabenteil vorgesehen, um die Abstützung gegenüber der äußeren Getriebeeingangswelle, die als Hohlwelle ausgebildet ist, zu gewährleisten. Der gesamte Aufbau ist daher noch nicht optimal.

Aufgabe der vorliegenden Erfindung ist es daher, eine trockene Doppelkupplung zu entwickeln, deren Verschleißverhalten verbessert t ist.

Die Aufgabe wird erfindungsgemäß durch die Merkmale des Kennzeichnüngsteile, des Patentanspruches 1 gelöst.

Der Vorschlag sieht vor, die trockene Kupplung in einem Doppelkupplungsgetriebe (DKG) derart zu gestalten, dass die Axialkräfte, die aufgrund der Betätigung der Kupplungen vom Getriebe aus aufgebracht werden müssen, direkt in das Getriebe eingeleitet werden. Dies wird durch die Anordnung des Axiallagers erreicht. Eine Abstützung der Axialkräfte auf die Kurbelwellenlagerung entfällt damit. Dadurch wird der Verschleiß der Motorlager verringert. Dies kann sich prinzipiell auch günstig auf den Kraftstoffverbrauch auswirken.

Grundsätzlich kann das Axiallager auch zur Verschleißverringerung für einfache Kupplungen in Automatisierten Schaltgetrieben (ASG) Verwendung finden.

Gemäß einer bevorzugten Ausführungsform der Erfindung sind die Getriebeeingangswellen als eine innere Welle und als eine koaxial zu der inneren Welle angeordnete äußere Hohlwelle ausgebildet.

Vorzugsweise ist die äußere Hohlwelle teilweise über die innere Welle geschoben. Dadurch kann eine besonders kompakte Bauweise der Doppelkupplung verwirklicht werden, was sich besonders vorteilhaft bei einer in einem Getriebegehäuse eines Kraftfahrzeuges integrierten Kupplung auswirkt.

Das Axiallager ist zwischen dem Kupplungsgehäuse und der inneren Getriebeeingangswelle angeordnet und mit der inneren Getriebeeingangswelle fest verbunden.

Bei dieser Anordnung werden die von den Ausrückern der Kupplungen eingebrachten Kräfte auf die innere Getriebeeingangswelle übertragen. Diese Welle überträgt die Kräfte ihrerseits über ein Wellenlager auf das Getriebegehäuse, wodurch ein geschlossener Kraftfluss innerhalb der Systemeinheit "Getriebe" erzeugt wird. Es werden keine Kräfte nach außen geleitet, insbesondere wird dadurch der Verschleiß der Kurbelwellenlager stark verringert.

Ein weiterer Vorteil ist, dass die Relativdrehzahl innerhalb des zusätzlichen Axiallagers verhältnismäßig gering ist. Die hier auftretende Differenzdrehzahl ist immer nur so groß, wie die Differenzdrehzahl innerhalb der zu der inneren Getriebeeingangswelle zugeordneten Kupplung. Da diese Kupplung während ca. 50% des Betriebes geschlossen ist, kann in diesem Lager auch kein zusätzlicher Leistungsverlust auftreten, so dass die Drehzahlbeanspruchung des Lagers niedrig gehalten wird.

Gemäß eines zusätlich beschreibenen Beispiel, einer Doppelkupplung ist das Axiallager zwischen dem Kupplungsgehäuse und dem Getriebegehäuse angeordnet.

In dieser Ausführungsform ist das Axiallager im Bereich der Ausrücker auf einem definierten Durchmesser um die Getriebeeingangswellen herum angeordnet. Es bildet die Lagerung der Doppelkupplung zum Getriebegehäuse und leitet die Axialkräfte bei einer Kupplungsbetätigung direkt an das Getriebegehäuse ab. Diese Möglichkeit bietet sich an, wenn konstruktionsbedingt ein ausreichender Einbauraum an dieser Stelle zur Verfügung steht. Eine besonders kompakte Bauform ist dadurch möglich. Das Axiallager kann in dieser Ausführungsform vorzugsweise als Rillenkugellager ausgebildet sein. Es ist derart ausgeformt, dass es vorkommende Schiefstellungen der Doppelkupplung, verursacht durch Achsversatz zwischen Motor und Getriebe, aufnehmen kann.

Nach einer weiteren bevorzugten Ausführungsform der Erfindung weist die Doppelkupplung ein Zweimassenschwungrad auf.

Bei Motoren mit hohen Drehmomenten bei niedrigen Drehzahlen, die in Verbindung mit Doppelkupplungsgetrieben häufig zur Verwendung kommen, entstehen insbesondere in höheren Gängen unkomfortable Drehschwingungen (Getrieberasseln), die man häufig mit Torsionsdämpfern wie etwa Schwungrädern auszugleichen versucht. Besonders vorteilhaft für einen komfortablen und möglichst verschleißarmen Betrieb ist in Doppelkupplungsgetrieben der Einsatz eines Zweimassenschwungrades. Ein Zweimassenschwungrad setzt eine zweigeteilte Schwungmasse (Primärschwungrad und Sekundärschwungrad) voraus, die untereinander mit Hilfe von Drehfedem und Drehdämpfern verbunden sind und auftretende Torsionsschwingungen effektiv dämpfen. Gemäß einer weiteren bevorzugten Ausführungsform ist das Zweimassenschwungrad in einem Mitnahmeblech, auf der der Kurbelwelle zugewandten Seite, integriert. Es ist auch möglich, dass das Zweimassenschwungrad in dem Kupplungsgehäuse integriert ist.

Diese Einbaustellen bewirken einen sehr hohen Wirkungsgrad der Dämpfung der unerwünschten Schwingungen unter Beibehaltung einer kompakten Bauweise.

Nach einer weiteren bevorzugten Ausführungsform sind die Andruckplatten der Kupplungen als Teil des Sekundärschwungrades ausgebildet.

Trockene Reibkupplungen erfordern eine ausreichend große Masse in den Andruckplatten zum Zwischenspeichern der in den Kupplungen verriebenen Energie. Daher ist es zweckmäßig, die Gesamtmasse, die zur Bildung des Sekundärschwungrades erforderlich ist, so dicht wie möglich an die Reibflächen der Kupplungen heranzubringen. Idealerweise bilden die Andruckplatten den überwiegenden Teil des Sekundärschwungrades.

Gemäß einer weiteren bevorzugten Ausführungsform ist das Kupplungsmitnahmeblech in axialer Richtung mit einer vorgebbaren Elastizität ausgeführt.

Voraussetzung für die optimale Funktionsweise der Axialkraftabstützung ist, dass das Kupplungsmitnahmeblech zwar verdrehsteif, jedoch in axialer Richtung elastisch ausgeführt ist. Durch die vorgebbare Elastizität werden Klemmkräfte aufgrund der vorhandenen Toleranzen zwischen der Doppelkupplung und der Kurbelwelle während der Montage des Getriebes an den Motor, vermieden.

Nach einer weiteren bevorzugten Ausführungsform ist die jeweilige Kupplung über einen, auf der jeweiligen Getriebeeingangswelle angeordneten Ausrücker, der jeweils mindestens ein Ausrücklager aufweist, ausrückbar.

Bei aktiv schließenden Doppelkupplungen kann es zu einer Überbeanspruchung der Ausrückerlager, insbesondere durch den vorzeitigen Verbrauch der begrenzten Lebensdauerbefettung, bei der Abstützung am Getriebegehäuse kommen. Dadurch, dass sich die Ausrückerlager und die hydraulische Betätigung auf derselben Welle befinden, wie die zu betätigende Kupplung, wird bei geschlossener Kupplung die Drehzahlbeanspruchung der Ausrückerlager gering gehalten. Dies trägt zusätzlich zur Verringerung des Verschleißes der Doppelkupplung bei. Die verschleißarme Ausführung erlaubt daher auch die Verwendung von herkömmlichen, kostengünstigen Ausrückerlagern für die aktiv schließende trockene Doppelkupplung.

Gemäß einer weiteren bevorzugten Ausführungsform bildet die Doppelkupplung mit dem Axiallager, über dass eine Axialkraft auf das Getriebegehäuse ableitbar ist, zusammen mit dem Doppelkupplungsgetriebe eine abprüfbare Fertigungseinheit.

Die in dem Getriebegehäuse angeordnete trockene Doppelkupplung mit dem Axiallager, ergibt eine im Zusammenbau mit dem Doppelkupplungsgetriebe abprüfbare Einheit in der Getriebefertigung. Dabei kann die gesamte Funktion des Getriebes inklusive der Funktionen der Doppelkupplung bzgl. Kupplungsregelung und Ausrücksystem in einem getriebebauenden Werk überprüft werden. Insbesondere kann dadurch auch die Funktion des Axiallagers bereits in dem getriebebauenden Werk überprüft werden. Dies wirkt sich kostengünstig auf die Fertigung und Qualitätssicherung aus.

Weitere Einzelheiten der Erfindung ergeben sich aus der nachfolgenden ausführlichen Beschreibung und den beigefügten Zeichnungen, in denen eine bevorzugte Ausführungsform der Erfindung veranschaulicht ist.

In den Figuren zeigen:
- Figur 1:: Eine schematische Darstellung einer erfindungsgemäßen Doppelkupplung im Längsschnitt durch die obere Hälfte und
- Figur 2:: im Detail ein Zweimassenschwungrad und zwei Ausrücker in einer beispeilhaft beschriebenen Doppelkupplung im Längsschnitt durch die obere Hälfte.

Eine Doppelkupplung 4 besteht im Wesentlichen aus einem Kupplungsgehäuse 8, zwei Kupplungen 10, 12, die mit zwei Getriebeeingangswellen 14, 20 verbunden sind, und einem Axiallager 25, das an der inneren Getriebeeingangswelle 14 befestigt ist.

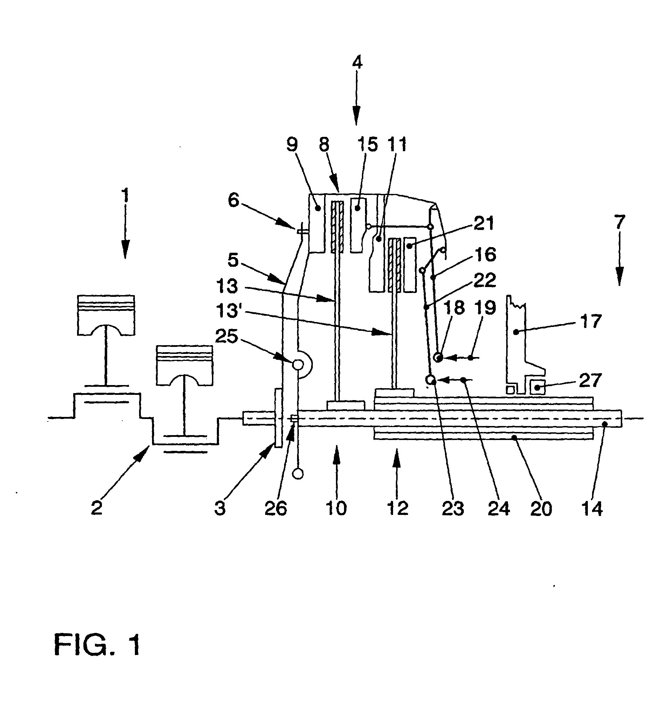

Dargestellt ist in Fig. 1 in schematischer Weise ein Verbrennungsmotor 1 mit einer Kurbelwelle 2 und einem Kurbelwellenflansch 3, der die Verbindung zur Doppelkupplung 4 darstellt. Die Doppelkupplung ist hier der Einfachheit halber nur zur Hälfte dargestellt. Die Verbindung zwischen dem Kurbelwellenflansch 3 und der Doppelkupplung 4 bildet ein Kupplungsmitnahmeblech 5, dass einerseits mit dem Kurbelwellenflansch 3 und andererseits mit Hilfe von Montageschrauben 6 an der Kupplung befestigt ist. Die Befestigung mit Hilfe der Montageschrauben 6 erfolgt nach dem Zusammenfügen von Motor 1 und Getriebe 7 (nicht explizit dargestellt). Die Doppelkupplung 4 besteht aus dem Gehäuse 8, das eine feststehende Andruckplatte 9 der einen Kupplung 10 und eine feststehende Andruckplatte 11 der anderen Kupplung 12 untereinander und mittels der Montageschrauben 6 mit der Kurbelwelle 2 verbindet.

Die eine Kupplung 10 besteht aus der Mitnehmerscheibe 13, die axial verschiebbar auf der einen Getriebeeingangswelle 14, die die innere Getriebeeingangswelle bildet, verbunden ist. Zusätzlich weißt die eine Kupplung 10 eine bewegliche Andruckplatte 15 auf, die ihrerseits axial verschiebbar aber verdrehfest im Kupplungsgehäuse 8 gelagert ist. Mittels eines Hebelmechanismus 16, der ebenfalls innerhalb des Kupplungsgehäuses 8 gelagert ist, wird von einem hier nicht dargestellten Einrücker eine Kraft 19 über ein Lager 18 auf die bewegliche Andruckplatte 15 übertragen. Durch Schließen der Luftspalte zwischen der Mitnehmerscheibe 13 einerseits und den Andruckplatten 9 und 15 andererseits und dem zusätzlichen Aufbringen einer Andruckkraft zwischen diesen Komponenten wird ein Drehmoment zwischen der Doppelkupplung 4 und der Getriebeeingangswelle 14 aufgebracht.

Für die andere Kupplung 12 gilt analog das gleiche wie für die eine Kupplung 10. Sie wird gebildet von der fest mit dem Kupplungsgehäuse 8 verbundenen Andruckplatte 11, der verschiebbar auf der anderen, als Hohlwelle ausgeführten Getriebeeingangswelle 20 montierten Mitnehmerscheibe 13', und der axial verschiebbar aber drehfest gegenüber dem Kupplungsgehäuse 8 gelagerten Andruckplatte 21. Diese bewegliche Andruckplatte wird ihrerseits über einen weiteren Hebelmechanismus 22 betätigt. Hierzu übt ein in Fig. 1 nicht dargestellter Ausrücker eine Kraft 24 über ein Lager 23 auf den Hebelmechanismus 22 aus, wodurch die Kupplung 12 geschlossen wird und ein Moment vom Kupplungsgehäuse 8 auf die andere Getriebeeingangswelle 20 übertragen wird.

Die nicht dargestellten Ausrücker stützen sich dabei am Getriebegehäuse 17 ab. Um die Axialkraft, die durch diese Ausrücker auf die Doppelkupplung 4 ausgeübt werden, nicht an die Kurbelwelle 2 weiterzuleiten, wird ein zusätzliches, vorteilhaft als fettgeschmiertes Lager ausgeführtes, Axiallager 25 eingebracht. Dieses Axiallager 25 ist mit der inneren Getriebeeingangswelle 14 fest verschraubt. Aufgrund dieses Axiallagers 25 werden die von den Ausrückern eingebrachten Kräfte auf die innere Getriebeeingangswelle 14 übertragen. Diese Welle 14 überträgt die Kräfte ihrerseits über ein ölgeschmiertes Wellenlager 27, das sich innerhalb des Getriebes 7, zwischen den Getriebeeingangswellen 14, 20 und dem Getriebegehäuse 17 befindet, auf das Getriebegehäuse 17, wodurch ein geschlossener Kraftfluss innerhalb der Systemeinheit "Getriebe" erzeugt wird.

Voraussetzung für die einwandfreie Funktionsweise dieser Axialkraftabstützung ist jedoch, dass das Kupplungsmitnahmeblech 5 zwar verdrehsteif, jedoch in axialer Richtung elastisch ausgeführt ist. Wird dieses Blech axial zu steif gestaltet, kommt es, aufgrund der vorhandenen Toleranzen zu Klemmkräften zwischen der Doppelkupplung 4 und der Kurbelwelle 2 während der Montage des Getriebes 7 an den Motor 1.

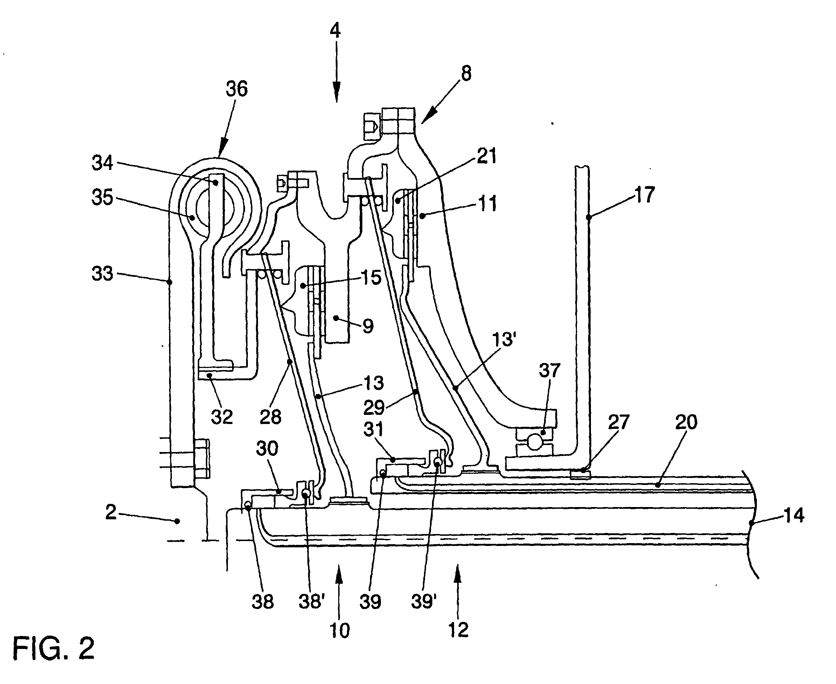

Das in der Fig. 2 beispielhaft beschriebene Ausführungsbeispiel einer Doppelkupplung weist ein Zweimassenschwungrad 36 auf. Die Schwungmasse ist in eine primäre 33 und eine sekundäre 34 Schwungmasse aufgeteilt. Die primäre Schwungmasse 33 ist an der Kurbelwelle 2 befestigt. Die sekundäre Schwungmasse 34 ist über eine Steckverzahnung 32 an der Kupplung angeordnet. Zwischen den Schwungmassen ist ein Torsionsdämpfer eingebaut, der durch eine gebogene Schraubenfeder 35 gebildet wird. Auftretende Drehschwingungen zwischen Motor 1 und Doppelkupplung 4, bzw. Getriebe 7, werden durch die Torsionsdämpfung des Zweimassenschwungrades 36 über die Feder 35 ausgeglichen.

Die Doppelkupplung 4 ist über das Kupplungsgehäuse 8 mit einem vorteilhaft als Axial-Rillenkugellager ausgebildeten Axiallager 37 gegenüber dem Getriebegehäuse 17 gelagert. Auf den Getriebeeingangswellen 14, 20 sind zwei Ausrücker 30, 31 angeordnet, die, hydraulisch betätigt, über die Membranfedern 28, 29 die Kupplungen 10, 12 ausrücken. Die Ausrücker 30, 31 weisen die Ausrückerlager 38, 38', 39, 39' auf. Bei geschlossener Kupplung rotiert der entsprechende Ausrücker 30, 31 mit der Getriebeeingangswelle 14, 20, so dass keine Drehzahlbeanspruchung des jeweiligen Lagers 38, 38', 39, 39' entsteht. Dies bewirkt, zusammen mit der Abstützung über das Axiallager 37, eine signifikante Verbesserung der Verschleißeigenschaften der Doppelkupplung auf Motor und Getriebe.

### BEZUGSZEICHENLISTE

- 1: Verbrennungskraftmaschine
- 2: Kurbelwelle
- 3: Kurbelwellenflansch
- 4: Doppelkupplung
- 5: Kupplungsmitnahmeblech
- 6: Montageschrauben
- 7: Doppelkupplungsgetriebe
- 8: Kupplungsgehäuse
- 9: Andruckplatte, fest
- 10: Kupplung
- 11: Andruckplatte, fest
- 12: Kupplung
- 13, 13': Mitnehmerscheibe
- 14: Innere Getriebeeingangswelle
- 15.: Bewegliche Andruckplatte
- 16: Hebelmechanismus
- 17: Getriebegehäuse
- 18: Einrückerlager
- 19: Betätigungskraft zum Einrücken der Kupplung 10
- 20: Äußere Getriebeeingangswelle (Hohlwelle)
- 21: Bewegliche Andruckplatte
- 22: Hebelmechanismus
- 23: Einrückerlager
- 24: Betätigungskraft zum Einrücken der Kupplung 12
- 25: Axiallager
- 26: Befestigung zwischen Axiallager 25 und Getriebeeingangswelle 14
- 27: Lagerung zwischen Getriebeeingangswellen und Getriebegehäuse
- 28: Membranfeder für Kupplung 10
- 29: Membranfeder für Kupplung 12
- 30: Ausrücker für Kupplung 10
- 31: Ausrücker für Kupplung 12
- 32: Steckverzahnung zwischen Zweimassenschwungrad 36 u. Kupplung 4
- 33: Primärschwungrad
- 34: Sekundärschwungrad
- 35: Schraubenfeder
- 36: Zweimassenschwungrad
- 37: Axiallager
- 38, 38': Ausrückerlager von Ausrücker 30
- 39, 39': Ausrückerlager von Ausrücker 31

## Patentansprüche

1. Doppetkupptung, mit einer innerhalb eines Getriebegehäuses angeordneten, trockenen Reibkupplungseinrichtung für ein Doppelkupplungsgetriebe eines Kraftfahrzeuges mit einer Verbrennungskraftmaschine, einer Kurbelwelle, und zwei Getriebeeingangswellen, wobei die Getriebeeingangswellen (14, 20) als eine innere Welle (14) und als eine koaxial zu der inneren Welle angeordnete äußere Hohlwelle (20) ausgebildet sind, die jeweils mit einer separaten Reibkupplung in Verbindung stehen und wahlweise über ein Kupplungsgehäuse mit der Kurbelwelle verbindbar sind, wobei an der Doppelkupplung (4) mindestens ein Axiallager (25, 37) angeordnet ist, über das die durch eine Kupplungsbetätigung auftretenden Axialkräfte auf das Getriebegehäuse (17) übertragbar sind, **dadurch gekennzeichnet, dass** das Axiallager (25) zwischen dem Kupplungsgehäuse (8) und der inneren Getriebeeingangswelle (14) angeordnet und mit der inneren Getriebeeingangswelle (14) fest verbunden ist.

2. Doppelkupplung nach dem vorhergehenden Anspruch, **dadurch gekennzeichnet, dass** ihre Reibkupplungseinrichtung aktiv schließend ist.

3. Doppelkupplung nach einem der Ansprüche 1 oder 2, **dadurch gekennzeichnet, dass** die Doppelkupplung (4) ein Zweimassenschwungrad (36), im Wesentlichen bestehend aus einem Primärschwungrad (33) und einem Sekundärschwungrad (34), aufweist.

4. Doppelkupplung nach Anspruch 3, **dadurch gekennzeichnet, dass** das Zweimassenschwungrad (36) in einem Kupplungsmitnahmeblech (5), auf der der Kurbelwelle (2) zugewandten Seite, integriert ist.

5. Doppelkupplung nach Anspruch 3, **dadurch gekennzeichnet, dass** das Zweimassenschwungrad (36) in dem Kupplungsgehäuse (8) integriert ist.

6. Doppelkupplung nach einem der Ansprüche 1 bis 5, **dadurch gekennzeichnet, dass** mindestens eine Andruckplatte (9, 11) einer Kupplung (10, 12) als Teil des Sekundärschwungrades (34) ausgebildet ist.

7. Doppelkupplung nach einem der Ansprüche 1 bis 6, **dadurch gekennzeichnet, dass** das Kupplungsmitnahmeblech (5) in axialer Richtung mit einer vorgebbaren Elastizität ausbildbar ist.

8. Doppelkupplung nach einem der Ansprüche 1 bis 7, **dadurch gekennzeichnet, dass** die jeweilige Kupplung (10, 12) über einen, auf der jeweiligen Getriebeeingangswelle (14, 20) angeordneten Ausrücker, (30,31) der jeweils mindestens ein Ausrücklager (38, 38', 39, 39') aufweist, ausrückbar ist.

9. Doppelkupplung nach einem der Ansprüche 1 bis 8, **dadurch gekennzeichnet, dass** die Doppelkupplung (4) mit dem Axiallager (25, 37) derart ausgebildet ist, dass sie zusammen mit dem Doppelkupplungsgetriebe eine abprüfbare Fertigungseinheit bildet.

## Claims

1. Dual clutch having a dry friction clutch device arranged within a transmission case and intended for a dual clutch transmission of a motor vehicle having an internal combustion engine, a crankshaft, and two transmission input shafts, the transmission input shafts (14, 20) being designed as an inner shaft (14) and as an outer hollow shaft (20) arranged coaxially with the inner shaft, which are each connected to a separate friction clutch and can be connected to the crankshaft optionally via a clutch case, at least one axial bearing (25, 37) being arranged on the dual clutch (4), via which the axial forces occurring due to the clutch being actuated can be transferred to the transmission case (17), **characterized in that** the axial bearing (25) is arranged between the clutch case (8) and the inner transmission input shaft (14) and is connected fixedly to the inner transmission input shaft (14).

2. Dual clutch according to the preceding claim, **characterized in that** its friction clutch device is an actively closing one.

3. Dual clutch according to either of Claims 1 and 2, **characterized in that** the dual clutch (4) has a two-mass flywheel (36), essentially comprising a primary flywheel (33) and a secondary flywheel (34).

4. Dual clutch according to Claim 3, **characterized in that** the two-mass flywheel (36) is integrated in a clutch drive plate (5), on the side facing the crankshaft (2).

5. Dual clutch according to Claim 3, **characterized in that** the two-mass flywheel (36) is integrated in the clutch case (8).

6. Dual clutch according to one of Claims 1 to 5, **characterized in that** at least one pressure plate (9, 11) of a clutch (10, 12) is designed as part of the secondary flywheel (34).

7. Dual clutch according to one of Claims 1 to 6, **characterized in that** the clutch drive plate (5) can be designed with a predeterminable elasticity in the axial direction.

8. Dual clutch according to one of Claims 1 to 7, **characterized in that** the respective clutch (10, 12) can be disengaged via a disengaging mechanism (30, 31) which is arranged on the respective transmission input shaft (14, 20) and has at least one disengaging bearing (38, 38', 39, 39') in each case.

9. Dual clutch according to one of Claims 1 to 8, **characterized in that** the dual clutch (4) with the axial bearing (25, 37) is formed in such a manner that, together with the dual clutch transmission, it forms a checkable manufacturing unit.

## Revendications

1. Embrayage double, comprenant un dispositif d'embrayage à friction sec disposé à l'intérieur d'un carter de boîte de vitesses pour une boîte de vitesses à embrayage double d'un véhicule automobile, avec un moteur à combustion interne, un vilebrequin, et deux arbres d'entrée de boîte de vitesses, les arbres d'entrée de boîte de vitesses (14, 20) étant réalisés sous la forme d'un arbre intérieur (14) et d'un arbre creux extérieur (20) disposé coaxialement à l'arbre intérieur, lesquels sont en liaison à chaque fois avec un embrayage à friction séparé et peuvent être reliés au choix au vilebrequin par le biais d'un carter d'embrayage, au moins un palier axial (25, 37) étant disposé sur l'embrayage double (4), par le biais duquel les forces axiales produites lors d'un actionnement de l'embrayage peuvent être transmises au carter de boîte de vitesses (17), **caractérisé en ce que** le palier axial (25) est disposé entre le carter d'embrayage (8) et l'arbre d'entrée de boîte de vitesses intérieur (14) et est connecté fixement à l'arbre d'entrée de boîte de vitesses intérieur (14).

2. Embrayage double selon la revendication précédente, **caractérisé en ce que** son dispositif d'embrayage à friction est à fermeture active.

3. Embrayage double selon l'une quelconque des revendications 1 et 2, **caractérisé en ce que** l'embrayage double (4) présente un volant d'inertie en deux parties (36), se composant essentiellement d'un volant d'inertie primaire (33) et d'un volant d'inertie secondaire (34).

4. Embrayage double selon la revendication 3, **caractérisé en ce que** le volant d'inertie en deux parties (36) est intégré dans une tôle d'entraînement d'embrayage (5) du côté tourné vers le vilebrequin (2).

5. Embrayage double selon la revendication 3, **caractérisé en ce que** le volant d'inertie en deux parties (36) est intégré dans le carter d'embrayage (8).

6. Embrayage double selon l'une quelconque des revendications 1 à 5, **caractérisé en ce qu'**au moins une plaque de pression (9, 11) d'un embrayage (10, 12) est réalisée en tant que partie du volant d'inertie secondaire (34).

7. Embrayage double selon l'une quelconque des revendications 1 à 6, **caractérisé en ce que** la tôle d'entraînement d'embrayage (5) peut être réalisée dans la direction axiale avec une élasticité prédéfinissable.

8. Embrayage double selon l'une quelconque des revendications 1 à 7, **caractérisé en ce que** l'embrayage respectif (10, 12) peut être débrayé par le biais d'un dispositif de débrayage (30, 31) qui est disposé sur l'arbre d'entrée de boîte de vitesses respectif (14, 20) et qui présente à chaque fois au moins un palier de débrayage (38, 38' ; 39, 39').

9. Embrayage double selon l'une quelconque des revendications 1 à 8, **caractérisé en ce que** l'embrayage double (4) est réalisé avec le palier axial (25, 37) de telle sorte qu'il forme conjointement avec la boîte de vitesses à double embrayage une unité de fabrication vérifiable.
